# EUROPEAN PATENT SPECIFICATION

(11) **EP 3 669 584 B1**
(45) Date of publication and mention of the grant of the patent: **21.10.2026**
(21) Application number: 17758652.6
(22) Date of filing: 14.08.2017
(51) Int. Cl.: H04W 48/14, H04W 24/10, H04W 48/18

(54) **WIRELESS ACCESS NETWORK SELECTION**
AUSWAHL EINES DRAHTLOSEN ZUGANGSNETZWERKS
SÉLECTION DE RÉSEAU D'ACCÈS SANS FIL

(43) Date of publication of application: 24.06.2020
(73) Proprietor: Telefonaktiebolaget LM Ericsson (Publ), 164 83 Stockholm (SE)
(72) Inventor: BOBERG, Christer, SE-137 55 Tungelsta (SE); LINDQVIST, Morgan, SE-174 46 Sundbyberg (SE); HEDBERG, Tomas, SE-131 35 Nacka (SE); VIKBERG, Jari, SE-153 38 Järna (SE)
(74) Representative: Ericsson
(86) International application number: PCT/SE2017/050822
(87) International publication number: WO 2019/035748

(56) References cited:
- US-A1- 2012 196 644
- US-A1- 2014 092 731
- US-A1- 2015 119 101
- US-A1- 2015 215 832
- US-A1- 2016 309 405
- "3rd Generation Partnership Project; Technical Specification Group Services and System Aspects; Network architecture (Release 14)", 3GPP STANDARD ; TECHNICAL SPECIFICATION ; 3GPP TS 23.002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.1.0, 13 March 2017 (2017-03-13), pages 1 - 114, XP051290431, [retrieved on 20170313]
- "3rd Generation Partnership Project; Technical Specification Group Core Network and Terminals; Access Network Discovery and Selection Function (ANDSF) Management Object (MO) (Release 14)", 15 June 2017 (2017-06-15), XP051304090, Retrieved from the Internet <URL:http://www.3gpp.org/ftp/tsg_ct/WG1_mm-cc-sm_ex-CN1/TSGC1_105_Krakow/draftspecs_afterCT76/> [retrieved on 20170615]

## Description

### Technical Field

The present invention relates to a method of selecting a wireless access network for a wireless client device and more particularly to such a method that deploys appropriate selection policies into the wireless client device.

### Background

Mobile or cellular wireless network technologies such as Public Land Mobile Networks (PLMN) have long supported mechanisms to facilitate network and access technology selection by wireless client devices. For example, PLMNs may support manual and/or automatic PLMN selection. In manual PLMN selection, a device or user equipment (UE) initiates a scan and selects a PLMN to attach to from a list of found and displayed PLMNs. In automatic selection, the device or UE attaches to a PLMN based on data stored in the UE's SIM card and stays attached to that PLMN until all contact is lost, whereupon the UE scans all frequencies supported by the UE to identify available PLMNs, and selects the PLMN with the highest priority according to some predefined policy.

Prior art document US2012196644A1 is directed to updating and optimizing network discovery and selection policies. US2015119101A1 relates to an enhancement to an access network discovery and selection function ("ANDSF").

The current mechanisms for providing wireless access network connectivity are tightly connected to the traditional ways that telecom network operators have provided services. Typically, operators act over a geographically limited area with competition among other local operators. Each operator has their own separate network with spectrum, radio, core and services.

There is an increasing interest in so-called 'global connectivity' solutions, i.e. network access solutions that are not restricted to specific national PLMNs alone or national PLMNs in collaboration with their selected international roaming partners. Such solutions are of particular relevance to shipping and freight industries, vehicle manufacturers, emerging Internet of Things (IoT) applications, etc., all of which often require a single global communication solution. These global connectivity solutions can, depending on, e.g. commercial agreements, use almost any PLMN or indeed any wireless access network (including WiFi) that offers Internet connectivity.

Whilst providing for much greater flexibility in terms of wireless network attachment, global connectivity solutions will potentially increase the challenges associated with wireless network selection (e.g. roaming) as the number of networks available to client devices can be relatively high and network properties and access technologies may vary greatly. It is unlikely that traditional PLMN-type selection mechanisms will be appropriate particularly as networks may appear and disappear, and change their properties and performance characteristics, relatively frequently.

### Summary

In view of the foregoing, an object of the present disclosure is to obviate at least one of the above disadvantages by providing an improved access network selection method.

The present invention is defined by the appended independent claims.

According to a first aspect there is provided a method of enabling wireless access network selection at a multiplicity of wireless client devices. The method comprises: for each of a plurality of wireless access networks, collecting data indicative of at least wireless access technology, geographic coverage and performance; storing said data in a database available to a server; deriving, at the server, a client device network selection policy from the data, the policy defining network measurements to be carried out by a client device and criteria to be used by the client device to select one or more wireless networks. The method further comprises sending the network selection policy to a wireless client device; and applying the network selection policy at the wireless client device to select and attach to one or more given wireless access networks, performing one or more of said network measurements on the given wireless access network(s) and using the results to make a determination to remain attached to the given wireless access network(s) or to select and attach to a further wireless access network or networks.

The method may comprise sending from a wireless client device to said server a request for a client device network selection policy, said steps of deriving and sending being responsive to receipt of the request by the server. Said request may include a current location of the wireless client device, and said step of deriving a client device network selection policy comprising deriving the policy based on that current location. The network measurements may comprise network bitrate and latency.

The client device network selection policy may comprise network conditions and performance thresholds. Said step of using the results to make a determination to remain attached to the given wireless access network(s) or to select and attach to a further wireless access network or networks, may comprise comparing said results against one or more of said network conditions and performance thresholds.

The client device network selection policy may comprise a validity time and validity area defining the time period and geographic area over which the policy is valid.

Said plurality of wireless access networks may comprise a plurality of Public Land Mobile Networks (PLMNs). Said step of collecting data may comprise collecting pricing data for each of said wireless access networks.

Said step of applying the network selection policy at the wireless client device to select and attach to one or more given wireless access networks, or of attaching to a further wireless access network or networks, may result in simultaneous attachment to two or more networks for the purpose of connectivity aggregation.

Said step of deriving may comprise deriving a client device network selection policy comprising a separate policy for each of a plurality of modems available at the wireless client device and said step of applying comprises applying the policies to respective modems, said further steps of performing and using being carried out per modem.

According to a second aspect there is provided a wireless client device comprising: one or more modems for attaching to a wireless access networks, the modem using a wireless access technology; a policy receiving unit, configured to receive a client device network selection policy defining network measurements to be carried out by the client device and criteria to be used by the client device to select a wireless access network; and a policy enacting unit configured to apply the network selection policy at the wireless client device to select and attach to a given wireless access network, perform one or more of said network measurements on the given wireless access network, and use the results to make a determination to remain attached to the given wireless access network or to select and attach to a further wireless access network.

The wireless client device may comprise a plurality of said modems, wherein said client device network selection policy comprises a policy for each modem and said policy enacting unit is configured to apply said steps of selection and attachment, performing, and using, on a per modem basis.

According to the present invention there is provided a vehicle comprising the wireless client device of the above second aspect of the present invention.

According to a third aspect there is provided a server for enabling wireless access network selection at a multiplicity of wireless client devices, comprising: a database containing, for each of a plurality of wireless access networks, data indicative of at least wireless access technology, geographic coverage and performance; a policy derivation unit, configured to derive a client device network selection policy from the data, the policy defining network measurements to be carried out by a client device and criteria to be used by the client device to select a wireless network; and a policy transmission unit, configured to send the derived policy to one or more client devices.

Said policy derivation unit may be configured to derive a client device network selection policy comprising a policy for each of a plurality of modems of the wireless client device.

### Brief Description of the Drawings

Figure 1 illustrates schematically different wireless access networks available to a user equipment;
Figure 2 is a schematic diagram illustrating a network selection system according to a first embodiment of the invention;
Figure 3 is a flow diagram illustrating further the embodiment of Figure 2; and
Figure 4 is a schematic diagram illustrating a network selection system according to a second embodiment of the invention.

### Detailed Description

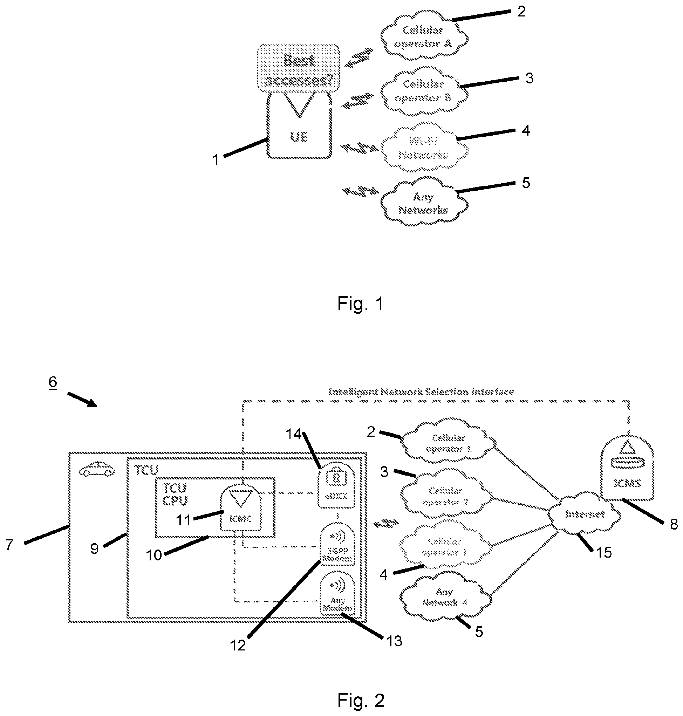

In the context of a global connectivity solution for wireless client devices (referred to hereinafter as "User Equipments" or "UEs"), Figure 1 illustrates a number of different wireless access networks available to a given UE 1 at a given location. The one or more networks may be operated by different network providers and use different wireless access technologies. For example, the networks may comprise one or more of: GSM, GPRS, EDGE, 3GPP, WCDMA, HSDPA, HSPA+, WiMAX, LTE, LTE-Advanced, Wi-Fi, 5G New Radio (NR), LoRA and satellite network technologies. The signal strength and performance of the networks available to the UE 1 will vary of course with geographical location. As discussed above, the conventional approach to network selection is either a manual selection from a list of available networks or automatic selection based upon statically configured (at the UE) preferences.

Figure 2 is a schematic diagram illustrating a network selection system 6 according to a first embodiment of the invention, considering the case where the UE is on board a vehicle 7 such as a car. As with the scenario of Figure 1, four wireless access networks 2, 3, 4, 5 are available to the UE in its "current" location. The vehicle 7 comprises a Telematics Control Unit (TCU) 9 for wireless communication. The TCU 9 comprises a TCU CPU 10 including an Intelligent Connectivity Management Client (ICMC) 11, a 3GPP modem 12, a modem 13 and an eUICC module 14. The modems enable the TCU to connect to one or more of the networks 2-5. The TCU 9 may comprise one or more different types of modem, to allow simultaneous connection to multiple network access technologies. Alternatively, the TCU 9 may comprise multiple modems of the same type, to allow simultaneous connection to multiple network operators using a single network access technology.

A global connectivity solution provider operates an Intelligent Connectivity Management Server (ICMS) 8 accessible via the Internet 15. In practice the ICMS may be, for example, a dedicated server, a server cluster, or a function located with the Cloud. The ICMS 8 operates within the network selection system 6 together with the ICMC 11 of the TCU 9. A primary function of the ICMS 8 is to create wireless access network selection policies that are sent to the TCU 9 and enacted by the ICMC 11. The network selection policies determine which of the networks 2-5 available to the modems 12,13 should be used by the TCU 9 under different circumstances. In the embodiment shown in Figure 2, the vehicle 7 is within range of three different cellular networks 2, 3, 4, provided by three different cellular operators, and a fourth network 5. The fourth network 5 uses a different network access technology to the cellular networks 2, 3, 4. For example, the fourth network 5 may be a Wi-Fi, LoRA or satellite network. All networks 2-5 provide access to the Internet 15 and therefore to the ICMS 8.

The ICMS 8 has access to network information about the geographical coverage, performance (e.g. bitrate and latency) and access technologies of the different networks 2-5. The ICMS 8 may also have access to network pricing information, and information about operator policy information. This information may comprise both statically configured data, e.g. based on agreements between network operators and the global connectivity service provider, or agreements between the global connectivity service provider and the users of the global connectivity service solution, and dynamically collected data, e.g. collected from networks (and or UEs) in real-time or near real-time. The network information may be stored in a database at the ICMS 8, or one or more remote databases accessible to the ICMS 8. The operator policy information may be specific for example to the vehicle manufacturer that the global connectivity service is provided to, or a fleet manage, company, individual etc that is subscribed to the service. The ICMS 8 may also have access to TCU information provided by the TCU 9, including TCU (vehicle) location, heading and network signal strength and performance measurements performed by the TCU 9. The ICMS 8 may continually update the network information with network signal strength and performance measurements from this and other client devices.

The ICMS 8 generates Intelligent Connectivity Management (ICM) information and provides the generated ICM information to the ICMC 11. The ICM information may be sent to individual TCUs (unicast), a group of TCUs (multicast) or all TCUs controlled by the ICMS (broadcast). The ICM information comprises one or more policy rules that, when enacted, determine which networks 2, 3, 4, 5 the TCU 9 should connect to under different circumstances. The ICM information may optionally include a validity area and validity time, to specify a geographical area and time period for which the policy rules are valid.

Each policy rule comprises thresholds and network selection actions that determine the networks to be selected. A policy rule may optionally comprise conditions related to the thresholds. The conditions may be pre-specified in the ICMC 11, such that only the threshold values for these conditions are sent from the ICMS 8 to the ICMC 11. The policy rule conditions and thresholds use predefined logic. Thresholds relate to local network information that the TCU 9 can measure, for example signal strength/quality, network bitrate, latency, or other data transfer measurements. Measurements may be obtained by sending dummy test data via unused connections or by performing occasional 'test selection' of connections. Measurements may be performed by the modems 12,13 in the TCU 9, or by a separate scanning device in the TCU 9 (not shown in the Figures). One example of a threshold is bitrate and latency per network as measured by the modems 12,13. In this case the policy rule may be defined as "acceptable performance level to select PLMN X".

A network selection action instructs the TCU 9 to perform a specific network task. For example, the network selection action may require the TCU 9 to attach to a network and quantify the performance of the network. The network selection action may instruct the TCU 9 to perform one or more of the following tasks:
- "Attach to a network": the network selection action defines that the TCU 9 should attach to a specific network. This may further be divided into "only attach" or "attach and start using the network".
- "Select between already attached networks": the network selection action defines that the TCU 9 should select between already attached networks.
- "Test attach to a network": the network selection action defines that the TCU 9 should attach to a specific network and perform measurements needed for the evaluation of the policy rules. After this the TCU 9 may detach from the specific network, or continue using it based on the policy rules and performed measurements.
- "Test already attached network": the network selection action defines that the ICMC 11 should select one of the already attached networks and perform measurements needed for the evaluation of the policy rules. After this the TCU 9 may for example detach from this network, continue using another attached network, or continue using this network based on the policy rules and performed measurements.

The policy rules may directly instruct the TCU 9 to connect to specific networks, or the policy rules may contain one or more criteria that the TCU 9 can use to select one or more of the available networks 2, 3, 4, 5. Where the TCU 9 comprises multiple modems, different policy rules may be provided for each modem to optimise usage of the modems. For example, if the TCU 9 comprises multiple modems of the same type, the policy rules may require that each modem connects to a different network operator. The policy rules may require that different modems using different networks operate on frequency spectra that are sufficiently spaced apart. The TCU 9 may provide information regarding the modems to the ICMS 8. The ICMS 8 can then provide policy rules optimised for the specific modems in a particular TCU 9, taking into account the performance and characteristics of each modem. If the current location (and heading) of the TCU 9 is known to the ICMS 8, the policy rules may be based on the current location (and heading), in addition to the information accessible by the ICMS 8.

The policy rules may be provided by the ICMS 8 on request by the TCU 9, or at regular intervals or as required by the ICMS 8 provider. Optionally, only one set of policy rules may be sent to the TCU 9. Each policy rule may be of different complexity, depending on whether the TCU 9 is mobile or stationary. Stationary devices have less need for dynamic rules than mobile devices, where conditions can change unexpectedly. If the TCU 9 is mobile, the policy rules may cover both the current geographic area of the TCU 9 and surrounding geographic areas.

The logic defined in the policy rules may require new functionality between the ICMC 11 and the modems 12,13, for example new APIs. Current APIs only allow some limited measurements after attaching to a network (and then only measurements of the current serving cell). This can be circumvented by extension of existing APIs or by adding a separate network scanner (not shown in the Figures) that is able to perform measurements on, e.g. different "cells" or access points without actively connecting to the network. A separate 3GPP scanner may be implemented by measuring energy levels per different entity of the network (e.g. EARFCN in LTE/E-UTRAN networks) without attaching to the network.

The policy rules provide increased flexibility in network utilisation that can benefit both clients and network providers, through optimisation of different network and client configurations. For example, the policy rules may enable the TCU 9 to connect to the most appropriate network for accessing a particular service, e.g. OTT content, depending on the service requirements. The policy rules may also be formulated such that overall network performance is optimised. For example, if the information accessed by the ICMS 8 shows that certain networks are congested, the policy rules can prioritise uncongested networks to reduce the strain on congested networks. The policy rules thus provide an effective and real-time way of optimising network usage.

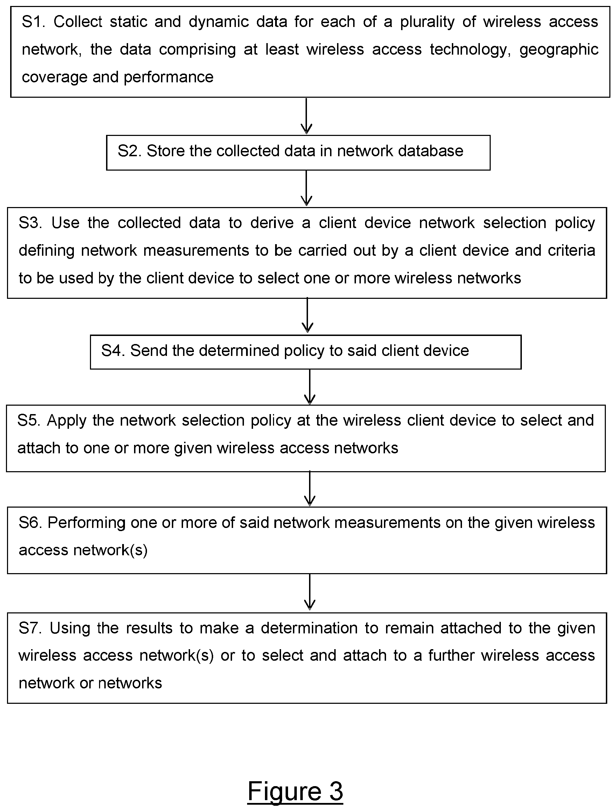

Figure 3 is a flow chart illustrating at a high level the method described above. The method performs the following steps:
S1. Collect static and dynamic data for each of a plurality of wireless access network, the data comprising at least wireless access technology, geographic coverage and performance.
S2. Store the collected data in network database.
S3. Use the collected data to derive a client device network selection policy defining network measurements to be carried out by a client device and criteria to be used by the client device to select one or more wireless networks.
S4. Send the determined policy to said client device.
S5. Apply the network selection policy at the wireless client device to select and attach to one or more given wireless access networks.
S6. Performing one or more of said network measurements on the given wireless access network(s).
S7. Using the results to make a determination to remain attached to the given wireless access network(s) or to select and attach to a further wireless access network or networks.

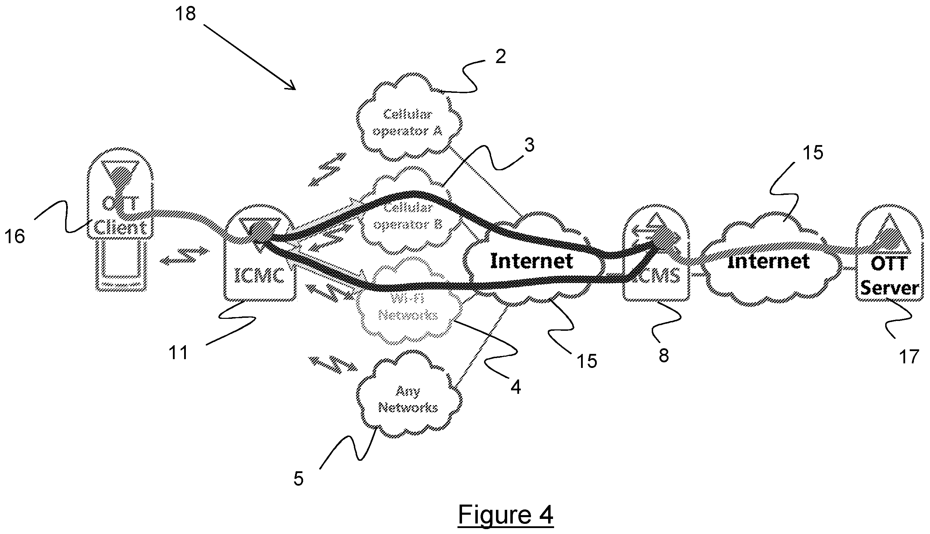

Figure 4 is a schematic diagram illustrating a network selection system according to a second embodiment of the invention. The second embodiment relates to connectivity aggregation, in which multiple networks are used simultaneously. In the embodiment illustrated in Figure 3, a connectivity aggregation system 18 is used to provide a connection between an OTT client 16 and OTT server 17. The OTT server 17 sends over the top (OTT) content to the OTT client 16. The OTT client 16 may be, for example, a mobile device. Connectivity aggregation is provided by the ICMC 11 in the TCU 9 connecting to the ICMS 8 through multiple access networks 2-5 simultaneously. As in the first embodiment, all of the access networks 2-5 provide access to the internet 15. In the embodiment shown in Figure 3, the ICMS 8 is connected to the OTT server 17 via the internet.

In addition to performing connectivity aggregation between the ICMC 11 and ICMS 8, connectivity aggregation may also be performed between the ICMC 11 and another function on network side (i.e. as OTT for the currently selected access networks). Since connectivity aggregation is performed between the ICMC 11 and the ICMS 8 or other network side function, connectivity aggregation is invisible to the OTT client 16 and OTT server 17. Connectivity aggregation thus allows for uninterrupted OTT access. In the embodiment shown in Figure 3, connectivity aggregation is performed between the ICMC 11 in the TCU 9 and ICMS 8. However connectivity aggregation may be provided between clients in the TCU 9 besides the ICMC 11, and network side functions besides the ICMS 8.

As in the first embodiment, the ICMS 8 provides Intelligent Connectivity Management (ICM) information to the ICMC 11. The ICM information of the second embodiment includes extended information over the ICM information of the first embodiment, to provide information for connectivity aggregation between the different networks selected based on ICM information.

Connectivity aggregation allows for fast switching between attached access networks and user plane aggregation between access networks. Connectivity aggregation enables the possibility of advanced traffic steering logic from the ICMS 8 to the ICMC 11 as part of the ICM information. For example, service-based selection of a specific network or service-agnostic aggregation of all traffic between two or more networks may be provided.

In service-based selection of a specific network, a single network is attached at any time for a specific service. Multiple services may require that multiple networks are used. One difficulty in implementing this type of functionality lies in implementing a mechanism that allows the ICMC 11 and ICMS 8 to identify different services. For example, if traffic is encrypted the only available information is at the "5-tuple" level, e.g. only information included in the IP and TCP/UDP headers may be available. Additionally, multiple service flows may be aggregated on a single encrypted connection (and still using the same "5-tuple").

In service-agnostic aggregation of all traffic between two or more attached networks, the different attached networks can be used to provide any service. This is useful, for example, in the case where the total amount of traffic between the ICMC 11 and ICMS 8 exceeds some maximum throughput in a single network. If redundancy is needed, one or more networks may be available in case the primary network connection is lost, instead of sending traffic over multiple simultaneous networks.

It will be appreciated by the person of skill in the art that various modifications may be made to the above described embodiments without departing from the scope of the present invention.

## Claims

1. A method of enabling wireless access network selection at a multiplicity of wireless client devices, the method comprising:
for each of a plurality of wireless access networks, collecting (S1) data indicative of at least wireless access technology, geographic coverage and performance;
storing (S2) said data in a database available to a server;
deriving (S3), at the server, a client device network selection policy from the data, the client device network selection policy defining network measurements to be carried out by a wireless client device and criteria to be used by the wireless client device to select one or more wireless networks;
sending (S4) the client device network selection policy to the wireless client device; and
applying (S5) the network selection policy at the wireless client device to select and attach to one or more given wireless access networks, performing (S6) one or more of said network measurements defined by the client device network selection policy on the given wireless access network(s) and using (S7) the results to make a determination to remain attached to the given wireless access network(s) or to select and attach to a further wireless access network or networks;
wherein said multiplicity of wireless client devices each comprises a plurality of modems for attaching to one or more of plurality of wireless access networks, the modems using a wireless access technology;
wherein said step of deriving (S3) comprises deriving a respective client device network selection policy comprising a separate policy for each of the plurality of modems available at the wireless client device, and said step of applying (S5) comprises applying the respective client device network selection policy to respective modem, said further steps of performing (S6) and using (S7) being carried out per modem; and
wherein said plurality of wireless access networks comprise a plurality of Public Land Mobile Networks, PLMNs.

2. The method according to claim 1, comprising sending from a wireless client device to said server a request for a client device network selection policy, said steps of deriving and sending being responsive to receipt of the request by the server.

3. The method according to claim 2, wherein said request includes a current location of the wireless client device, and said step of deriving a client device network selection policy comprising deriving the policy based on that current location.

4. The method according to claim 1, wherein the network measurements comprise network bitrate and latency.

5. The method according to any one of the preceding claims, wherein the client device network selection policy comprises network conditions and performance thresholds.

6. The method according to claim 5, wherein said step of using the results to make a determination to remain attached to the given wireless access network(s) or to select and attach to a further wireless access network or networks, comprises comparing said results against one or more of said network conditions and performance thresholds.

7. The method according to any one of the preceding claims, wherein the client device network selection policy comprises a validity time and validity area defining the time period and geographic area over which the policy is valid.

8. The method according to any one of the preceding claims, wherein said step of collecting data comprises collecting pricing data for each of said wireless access networks.

9. The method according to any one of the preceding claims, wherein said step of applying the network selection policy at the wireless client device to select and attach to one or more given wireless access networks, or of attaching to a further wireless access network or networks, results in simultaneous attachment to two or more networks for the purpose of connectivity aggregation.

10. A wireless client device (1, 16), comprising:
a policy receiving unit, configured to receive a client device network selection policy defining network measurements to be carried out by the wireless client device and criteria to be used by the wireless client device to select one or more wireless networks; and
a policy enacting unit configured to apply the client device network selection policy at the wireless client device to select and attach to a given wireless access network, perform one or more of said network measurements on the given wireless access network, and use the results to make a determination to remain attached to the given wireless access network or to select and attach to a further wireless access network; and
a plurality of modems for attaching to one or more of plurality of wireless access networks, the modems using a wireless access technology;
wherein said client device network selection policy comprises a respective policy for each modem and said policy enacting unit is configured to apply said steps of selection and attachment, performing, and using, on a per modem basis; and
wherein said plurality of wireless access networks comprises a plurality of Public Land Mobile Networks, PLMNs.

11. A vehicle (7) comprising the wireless client device of claim 10.

12. A system comprising a server, a plurality of wireless access networks and a multiplicity of wireless client devices according to claim 10, wherein:
the server (8, 17) for enabling wireless access network selection at the multiplicity of wireless client devices, comprises:
a database containing, for each of a plurality of wireless access networks, collected data indicative of at least wireless access technology, geographic coverage and performance;
a policy derivation unit, configured to derive a client device network selection policy from the data, the client device network selection policy defining network measurements to be carried out by a wireless client device and criteria to be used by the wireless client device to select one or more wireless networks; and
a policy transmission unit, configured to send the derived client device network selection policy to one or more wireless client devices;
wherein said multiplicity of wireless client devices each comprises a plurality of modems for attaching to one or more of plurality of wireless access networks, the modems using a wireless access technology;
wherein said policy derivation unit is configured to derive the respective client device network selection policy comprising a policy for each of the plurality of modems of the respective wireless client device; and
wherein said plurality of wireless access networks comprise a plurality of Public Land Mobile Networks, PLMNs.

## Patentansprüche

1. Verfahren zur Ermöglichung der Auswahl eines drahtlosen Zugangsnetzwerks an einer Vielzahl von drahtlosen Client-Vorrichtungen, wobei das Verfahren Folgendes umfasst:
für jedes einer Mehrzahl von drahtlosen Zugangsnetzwerken Erfassen (S1) von Daten, die mindestens drahtlose Zugangstechnologie, geografische Abdeckung und Leistungsfähigkeit angeben;
Speichern (S2) der Daten in einer Datenbank, die für einen Server verfügbar ist;
Ableiten (S3) einer Client-Vorrichtungs-Netzwerkauswahlrichtlinie aus den Daten an dem Server, wobei die Client-Vorrichtungs-Netzwerkauswahlrichtlinie Netzwerkmessungen, die von einer drahtlosen Client-Vorrichtung durchgeführt werden sollen, und Kriterien definiert, die von der drahtlosen Client-Vorrichtung verwendet werden sollen, um ein oder mehrere drahtlose Netzwerke auszuwählen;
Senden (S4) der Client-Vorrichtungs-Netzwerkauswahlrichtlinie an die drahtlose Client-Vorrichtung; und
Anwenden (S5) der Netzwerkauswahlrichtlinie an der drahtlosen Client-Vorrichtung, um ein oder mehrere gegebene drahtlose Zugangsnetzwerke auszuwählen und sich daran anzuschließen, Durchführen (S6) einer oder mehrerer der durch die Client-Vorrichtungs-Netzwerkauswahlrichtlinie definierten Netzwerkmessungen an dem/den gegebenen drahtlosen Zugangsnetzwerk(en) und Verwenden (S7) der Ergebnisse, um eine Bestimmung durchzuführen, an dem/den gegebenen drahtlosen Zugangsnetzwerk(en) angeschlossen zu bleiben oder ein oder mehrere weitere drahtlose Zugangsnetzwerk(e) auszuwählen und sich daran anzuschließen;
wobei die Vielzahl von drahtlosen Client-Vorrichtungen eine Mehrzahl von Modems zum Anschließen an eines oder mehrere der Mehrzahl von drahtlosen Zugangsnetzwerken umfasst, wobei die Modems eine drahtlose Zugangstechnologie verwenden;
wobei der Schritt des Ableitens (S3) Ableiten einer jeweiligen Client-Vorrichtungs-Netzwerkauswahlrichtlinie umfasst, die eine separate Richtlinie für jedes der Mehrzahl von Modems umfasst, die an der drahtlosen Client-Vorrichtung verfügbar sind, und der Schritt des Anwendens (S5) Anwenden der jeweiligen Client-Vorrichtungs-Netzwerkauswahlrichtlinie auf das jeweilige Modem umfasst, wobei die weiteren Schritte des Durchführens (S6) und Verwendens (S7) pro Modem ausgeführt werden; und
wobei die Mehrzahl von drahtlosen Zugangsnetzwerken eine Mehrzahl von öffentlichen Landfunknetzwerken, PLMNs, umfasst.

2. Verfahren nach Anspruch 1, umfassend Senden einer Anforderung für eine Client-Vorrichtungs-Netzwerkauswahlrichtlinie von einer drahtlosen Client-Vorrichtung an den Server, wobei die Schritte des Ableitens und Sendens in Reaktion auf den Empfang der Anforderung durch den Server erfolgen.

3. Verfahren nach Anspruch 2, wobei die Anforderung einen aktuellen Standort der drahtlosen Client-Vorrichtung umfasst und der Schritt des Ableitens einer Client-Vorrichtungs-Netzwerkauswahlrichtlinie Ableiten der Richtlinie basierend auf dem aktuellen Standort umfasst.

4. Verfahren nach Anspruch 1, wobei die Netzwerkmessungen Bitrate und Latenz umfassen.

5. Verfahren nach einem der vorhergehenden Ansprüche, wobei die Client-Vorrichtungs-Netzwerkauswahlrichtlinie Netzwerkbedingungen und Leistungsfähigkeitsschwellenwerte umfasst.

6. Verfahren nach Anspruch 5, wobei der Schritt des Verwendens der Ergebnisse, um eine Bestimmung durchzuführen, an das/die gegebenen drahtlosen Zugangsnetzwerk(e) angeschlossen zu bleiben oder ein oder mehrere weitere drahtlose Netzwerk(e) auszuwählen und sich daran anzuschließen, Vergleichen der Ergebnisse mit einer oder mehreren der Netzwerkbedingungen und Leistungsfähigkeitsschwellenwerte umfasst.

7. Verfahren nach einem der vorhergehenden Ansprüche, wobei die Client-Vorrichtungs-Netzwerkauswahlrichtlinie eine Gültigkeitsdauer und einen Gültigkeitsbereich umfasst, die den Zeitraum und den geografischen Bereich definieren, für die die Richtlinie gültig ist.

8. Verfahren nach einem der vorhergehenden Ansprüche, wobei der Schritt des Erfassens von Daten Erfassen von Preisdaten für jedes der drahtlosen Zugangsnetzwerke umfasst.

9. Verfahren nach einem der vorhergehenden Ansprüche, wobei der Schritt des Anwendens der Client-Vorrichtungs-Netzwerkauswahlrichtlinie an der drahtlosen Client-Vorrichtung, um ein oder mehrere gegebene drahtlose Zugangsnetzwerke auszuwählen und sich daran anzuschließen, oder des Anschließens an ein oder mehrere weitere drahtlose Zugangsnetzwerk(e) zum gleichzeitigen Anschluss an zwei oder mehr Netzwerke zum Zweck der Konnektivitätsaggregation führt.

10. Drahtlose Client-Vorrichtung (1, 16), umfassend:
eine Richtlinienempfangseinheit, die dazu ausgelegt ist, eine Client-Vorrichtungs-Netzwerkauswahlrichtlinie zu empfangen, die Netzwerkmessungen, die von der drahtlosen Client-Vorrichtung durchgeführt werden sollen, und Kriterien definiert, die von der drahtlosen Client-Vorrichtung verwendet werden sollen, um ein oder mehrere drahtlose Netzwerke auszuwählen; und
eine Richtlinienausführungseinheit, die dazu ausgelegt ist, die Client-Vorrichtungs-Netzwerkauswahlrichtlinie an der drahtlosen Client-Vorrichtung anzuwenden, um ein gegebenes drahtloses Zugangsnetzwerk auszuwählen und sich daran anzuschließen, eine oder mehrere Netzwerkmessungen an dem gegebenen drahtlosen Zugangsnetzwerk durchzuführen und die Ergebnisse zu verwenden, um eine Bestimmung durchzuführen, an dem drahtlosen Zugangsnetzwerk angeschlossen zu bleiben oder ein weiteres drahtloses Zugangsnetzwerk auszuwählen und sich daran anzuschließen; und
eine Mehrzahl von Modems zum Anschließen an eines oder mehrere der Mehrzahl von drahtlosen Zugangsnetzwerken, wobei die Modems eine drahtlose Zugangstechnologie verwenden;
wobei die Client-Vorrichtungs-Netzwerkauswahlrichtlinie eine jeweilige Richtlinie für jedes Modem umfasst und die Richtlinienausführungseinheit dazu ausgelegt ist, die Schritte des Auswählens und Anschließens, Durchführens und Verwendens auf einer Pro-Modem-Basis anzuwenden; und
wobei die Mehrzahl von drahtlosen Zugangsnetzwerken eine Mehrzahl von öffentlichen Landfunknetzwerken, PLMNs, umfasst.

11. Fahrzeug (7), umfassend die drahtlose Client-Vorrichtung nach Anspruch 10.

12. System, umfassend einen Server, eine Mehrzahl von drahtlosen Zugangsnetzwerken und eine Vielzahl von drahtlosen Client-Vorrichtungen nach Anspruch 10, wobei:
der Server (8, 17) zum Ermöglichen der Auswahl eines drahtlosen Zugangsnetzwerks an der Vielzahl von drahtlosen Client-Vorrichtungen Folgendes umfasst:
eine Datenbank, die für jedes einer Mehrzahl von drahtlosen Zugangsnetzwerken erfasste Daten enthält, die mindestens drahtlose Zugangstechnologie, geografische Abdeckung und Leistungsfähigkeit angeben;
eine Richtlinienableiteinheit, die dazu ausgelegt ist, eine Client-Vorrichtungs-Netzwerkauswahlrichtlinie aus den Daten abzuleiten, wobei die Client-Vorrichtungs-Netzwerkauswahlrichtlinie Netzwerkmessungen, die von einer drahtlosen Client-Vorrichtung durchgeführt werden sollen, und Kriterien definiert, die von der drahtlosen Client-Vorrichtung verwendet werden sollen, um ein oder mehrere drahtlose Netzwerke auszuwählen; und
eine Richtlinienübertragungseinheit, die dazu ausgelegt ist, die abgeleitete Client-Vorrichtungs-Netzwerkauswahlrichtlinie an eine oder mehrere drahtlose Client-Vorrichtungen zu senden;
wobei die Vielzahl von drahtlosen Client-Vorrichtungen eine Mehrzahl von Modems zum Anschließen an eines oder mehrere der Mehrzahl von drahtlosen Zugangsnetzwerken umfasst, wobei die Modems eine drahtlose Zugangstechnologie verwenden;
wobei die Richtlinienableiteinheit dazu ausgelegt ist, die jeweilige Client-Vorrichtungs-Netzwerkauswahlrichtlinie abzuleiten, die eine Richtlinie für jedes der Mehrzahl von Modems der jeweiligen drahtlosen Client-Vorrichtung umfasst; und
wobei die Mehrzahl von drahtlosen Zugangsnetzwerken eine Mehrzahl von öffentlichen Landfunknetzwerken, PLMNs, umfasst.

## Revendications

1. Procédé d'activation d'une sélection de réseau d'accès sans fil au niveau d'une multiplicité de dispositifs clients sans fil, le procédé comprenant :
pour chacun d'une pluralité de réseaux d'accès sans fil, la collecte (S1) de données indiquant au moins une technologie d'accès sans fil, une couverture géographique et une performance ;
le stockage (S2) desdites données dans une base de données disponible pour un serveur ;
la déduction (S3), au niveau du serveur, d'une politique de sélection de réseau de dispositifs clients à partir des données, la politique de sélection de réseau de dispositifs clients définissant des mesures de réseau à réaliser par un dispositif client sans fil et des critères à utiliser par le dispositif client sans fil pour sélectionner un ou plusieurs réseaux sans fil ;
l'envoi (S4) de la politique de sélection de réseau de dispositifs clients au dispositif client ; et
l'application (S5) de la politique de sélection de réseau au niveau du dispositif client sans fil pour sélectionner et se rattacher à un ou plusieurs réseaux d'accès sans fil donnés, la réalisation (S6) d'une ou plusieurs desdites mesures de réseau définies par la politique de sélection de réseau de dispositifs clients sur le ou les réseaux d'accès sans fil donnés et l'utilisation (S7) des résultats pour effectuer une détermination de rester rattaché au ou aux réseaux d'accès sans fil donnés ou de sélectionner et de se rattacher à un ou plusieurs autres réseaux d'accès sans fil ;
dans lequel ladite multiplicité de dispositifs clients sans fil comprennent chacun une pluralité de modems pour se rattacher à un ou plusieurs d'une pluralité de réseaux d'accès sans fil, les modems utilisant une technologie d'accès sans fil ;
dans lequel ladite étape de déduction (S3) comprend la déduction d'une politique de sélection de réseau de dispositifs clients respective comprenant une politique distincte pour chacun de la pluralité de modems disponibles au niveau du dispositif client sans fil, et ladite étape d'application (S5) comprend l'application de la politique de sélection de réseau de dispositifs clients respective à un modem respectif, lesdites autres étapes de réalisation (S6) et d'utilisation (S7) étant effectuées modem par modem ; et
dans lequel ladite pluralité de réseaux d'accès sans fil comprend une pluralité de réseaux mobiles terrestres publics, PLMN.

2. Procédé selon la revendication 1, comprenant l'envoi, d'un dispositif client sans fil audit serveur, d'une demande d'une politique de sélection de réseau de dispositifs clients, lesdites étapes de déduction et d'envoi se déroulant en réponse à une réception de la demande par le serveur.

3. Procédé selon la revendication 2, dans lequel ladite demande inclut un emplacement actuel du dispositif client sans fil, et ladite étape de déduction d'une politique de sélection de réseau de dispositifs clients comprenant la déduction de la politique sur la base de cet emplacement actuel.

4. Procédé selon la revendication 1, dans lequel les mesures de réseau comprennent un débit binaire et une latence de réseau.

5. Procédé selon l'une quelconque des revendications précédentes, dans lequel la politique de sélection de réseau de dispositifs clients comprend des conditions et des seuils de performance de réseau.

6. Procédé selon la revendication 5, dans lequel ladite étape d'utilisation des résultats pour effectuer une détermination de rester rattaché au ou aux réseaux d'accès sans fil donnés ou de sélectionner et de se rattacher à un ou plusieurs autres réseaux d'accès sans fil comprend la comparaison desdits résultats à un ou plusieurs desdites conditions de réseau et desdits seuils de performance de réseau.

7. Procédé selon l'une quelconque des revendications précédentes, dans lequel la politique de sélection de réseau de dispositifs clients comprend un temps de validité et une zone de validité définissant la période de temps et la zone géographique dans lesquelles la politique est valide.

8. Procédé selon l'une quelconque des revendications précédentes, dans lequel ladite étape de collecte de données comprend la collecte de données tarifaires pour chacun desdits réseaux d'accès sans fil.

9. Procédé selon l'une quelconque des revendications précédentes, dans lequel ladite étape d'application de la politique de sélection de réseau au niveau du dispositif client sans fil pour sélectionner et se rattacher à un ou plusieurs réseaux d'accès sans fil donnés ou de rattachement à un ou plusieurs autres réseaux d'accès sans fil engendre le rattachement simultané à deux réseaux ou plus à des fins d'agrégation de connectivité.

10. Dispositif client sans fil (1, 16) comprenant :
une unité de réception de politique, configurée pour recevoir une politique de sélection de réseau de dispositifs clients définissant des mesures de réseau à réaliser par le dispositif client sans fil et des critères à utiliser par le dispositif client sans fil pour sélectionner un ou plusieurs réseaux sans fil ; et
une unité de mise en œuvre de politique configurée pour appliquer la politique de sélection de réseau de dispositifs clients au niveau du dispositif client sans fil pour sélectionner et se rattacher à un réseau d'accès sans fil donné, réaliser une ou plusieurs desdites mesures de réseau sur le réseau d'accès sans fil donné et utiliser les résultats pour effectuer une détermination de rester rattaché au ou aux réseaux d'accès sans fil donnés ou de sélectionner et de se rattacher à un autre réseau d'accès sans fil ; et
une pluralité de modems pour se rattacher à un ou plusieurs d'une pluralité de réseaux d'accès sans fil, les modems utilisant une technologie d'accès sans fil ;
dans lequel ladite politique de sélection de réseau de dispositifs clients comprend une politique respective pour chaque modem et ladite unité de mise en œuvre de politique est configurée pour appliquer lesdites étapes de sélection et de rattachement, de réalisation et d'utilisation modem par modem ; et
dans lequel ladite pluralité de réseaux d'accès sans fil comprend une pluralité de réseaux mobiles terrestres publics, PLMN.

11. Véhicule (7) comprenant le dispositif client sans fil selon la revendication 10.

12. Système comprenant un serveur, une pluralité de réseaux d'accès sans fil et une multiplicité de dispositifs clients sans fil selon la revendication 10, dans lequel :
le serveur (8, 17) d'activation de sélection de réseau d'accès sans fil au niveau de la multiplicité de dispositifs clients sans fil comprend :
une base de données contenant, pour chacun d'une pluralité de réseaux d'accès sans fil, des données collectées indiquant au moins une technologie d'accès sans fil, une couverture géographique et une performance ;
une unité de déduction de politique, configurée pour déduire une politique de sélection de réseau de dispositifs clients à partir des données, la politique de sélection de réseau de dispositifs clients définissant des mesures de réseau à réaliser par un dispositif client sans fil et des critères à utiliser par le dispositif client sans fil pour sélectionner un ou plusieurs réseaux sans fil ;
une unité de transmission de politique, configurée pour envoyer la politique de sélection de réseau de dispositifs clients déduite à un ou plusieurs dispositifs clients sans fil ;
dans lequel ladite multiplicité de dispositifs clients sans fil comprennent chacun une pluralité de modems pour se rattacher à un ou plusieurs d'une pluralité de réseaux d'accès sans fil, les modems utilisant une technologie d'accès sans fil ;
dans lequel ladite unité de déduction de politique est configurée pour déduire la politique de sélection de réseau de dispositifs clients respective comprenant une politique pour chacun de la pluralité de modems du dispositif client sans fil respectif ; et
dans lequel ladite pluralité de réseaux d'accès sans fil comprend une pluralité de réseaux mobiles terrestres publics, PLMN.
